(19) Europäisches Patentamt / European Patent Office / Office européen des brevets

(11) **EP 4 336 580 A1**

(12) **EUROPEAN PATENT APPLICATION**
published in accordance with Art. 153(4) EPC

(43) Date of publication:
**13.03.2024 Bulletin 2024/11**

(21) Application number: **21941070.1**

(22) Date of filing: **08.05.2021**

(51) International Patent Classification (IPC):
**H01M 4/13** (2010.01)          **H01M 10/052** (2010.01)
**H01M 50/533** (2021.01)

(52) Cooperative Patent Classification (CPC):
**H01M 4/13; H01M 10/052; H01M 50/533;**
Y02E 60/10; Y02P 70/50

(86) International application number:
**PCT/CN2021/092436**

(87) International publication number:
**WO 2022/236489 (17.11.2022 Gazette 2022/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited Ningde, Fujian 352100 (CN)**

(72) Inventors:
• **HUANG, Shaojun**
  **Ningde, Fujian 352100 (CN)**
• **LIN, Maocai**
  **Ningde, Fujian 352100 (CN)**
• **LAO, Shaojiang**
  **Ningde, Fujian 352100 (CN)**
• **CHEN, Honghao**
  **Ningde, Fujian 352100 (CN)**

(74) Representative: **Icosa**
  **83 avenue Denfert-Rochereau**
  **75014 Paris (FR)**

(54) **BATTERY CELL AND ELECTRICAL DEVICE**

(57)     This application provides a battery cell and an electrical device. The battery cell includes a first electrode plate and a second electrode plate that are alternately stacked. A separator is disposed between the first electrode plate and the second electrode plate. The first electrode plate includes a first current collector and a first active material layer disposed on the first current collector. The first active material layer includes a body portion and an end portion. The end portion is provided with a raised structure and a transition section. The transition section is adjacent to the body portion and the raised structure. In a thickness direction of the battery cell, a distance from a lowest point of a surface of the transition section to a surface of the first current collector is hr, and a thickness of the body portion of the first active material layer is ha, where (ha - hr)/ha ≤ 2%. In a cycling process of the battery cell, the battery cell is not prone to lithium precipitation at the end portion of the first electrode plate, so that performance of the battery cell is improved.

FIG.2

## Description

## TECHNICAL FIELD

Embodiments of this application relate to the technical field of batteries, and in particular, to a battery cell and an electrical device.

## BACKGROUND

A battery cell is a device that converts external energy into electric energy and stores it therein in order to supply power to external electrical devices (e.g., portable electronic devices) at moments of need. At present, battery cells are widely applied to electrical devices such as unmanned aerial vehicles, mobile phones, tablets, notebook computers, etc. Generally, a battery cell includes a first electrode plate, a separator and a second electrode plate. The first electrode plate, the separator and the second electrode plate are stacked, and the first electrode plate and the second electrode plate have opposite polarities. Each of the first electrode plate and the second electrode plate includes a current collector and an active material layer coated on the current collector. When active materials are coated on the current collectors to form the active material layers, end portions of the active material layers will be inevitably thinned, which renders a risk of lithium precipitation at the end portions of the electrode plates.

## SUMMARY

Embodiments of this application aim to provide a battery cell and an electrical device, in order to solve the problem in the prior art that in a cycling process of battery cells, with continuous consumption of an electrolyte, end portions of active material layers of electrode plates are prone to lithium precipitation, which will lead to swelling of the battery cell in the areas, thus making the battery cell fail.

According to an aspect of an embodiment of this application, a battery cell is provided, including a first electrode plate, a second electrode plate and a separator. The first electrode plate and the second electrode plate are alternately stacked, and the separator is disposed between the first electrode plate and the second electrode plate. The first electrode plate includes a first current collector and a first active material layer disposed on the first current collector. The first active material layer includes a body portion and an end portion. The end portion is provided with a raised structure and a transition section. The transition section is adjacent to the body portion and the raised structure. In a thickness direction of the battery cell, a distance from a lowest point of a surface of the transition section to a surface of the first current collector is hr, and a thickness of the body portion of the first active material layer is ha, where (ha-hr)/ha $\leq$ 2%. By defining the transition section and forming the raised structure on the end portion of the first active material layer, in the cycling process of the battery cell, with continuous consumption of an electrolyte, the battery cell is not prone to lithium precipitation at the end portion of the first active material layer, i.e., not prone to lithium precipitation in a thinned area of the first electrode plate, so that the battery cell has excellent performance.

The surface of the transition section is a surface of the transition section away from the first current collector.

The first current collector is provided with a first tab, and a direction of the first tab extending out of the first current collector is defined as a length direction of the battery cell. In the length direction of the battery cell, an area within a range of 10 mm from an edge of the first active material layer is an end portion of the first active material layer.

The thickness direction of the battery cell is a direction in which the first electrode plate and the second electrode plate are stacked.

The transition section is formed in such a way that the end portion of the first active material layer is sunken away from the surface of the first current collector towards the first current collector. The lowest point of the transition section is a point corresponding to a maximum distance of sinking.

In an optional manner, the first current collector is provided with a first tab, and a direction of the first tab extending out of the first current collector is defined as a length direction of the battery cell; in the length direction of the battery cell, a distance from the lowest point of the transition section to an edge of the first active material layer is xr, where 2 mm $\leq$ xr $\leq$ 4 mm; the transition section is provided with a point B, and a distance from the point B to the edge of the first active material layer is xb, where xb - xr = 2 mm; and a distance from the point B to the surface of the first current collector is hb, where (hb - hr) /(xb - xr) $\leq$ 2. The edge of the first active material layer is an edge of the end portion of the first active material layer away from the body portion of the first active material layer. The point B on the transition section includes a point of the transition section farthest from the end portion of the first active material layer, that is, the point B on the transition section includes an end on a notch of the transition section close to the body portion of the first active material layer. By further defining the transition section, the occurrence of a deep and narrow sinking portion can be avoided.

In an optional manner, in the length direction of the battery cell, a distance from a vertex of a surface of the raised structure to the edge of the first active material layer is xt, where 0.8 mm $\leq$ xt $\leq$ 1.2 mm.

The surface of the raised structure is a surface of the raised structure away from the first current collector.

The vertex of the surface of the raised structure is a point of the surface of the raised structure farthest from the first current collector in the thickness direction of the battery cell.

In an optional manner, the second electrode plate includes a second current collector and a second active material layer disposed on the second current collector; and the end portion of the first active material layer and an end portion of the second active material layer are stacked. That is, in the thickness direction of the battery cell, the end portion of the first active material layer and the end portion of the second active material layer are stacked; and the end portion of the first active material layer and the end portion of the second active material layer can be stacked in such a way that an edge of the end portion of the first active material layer and an edge of the end portion of the second active material layer are completely aligned, or the end portions of the two can be partially stacked with the edges not aligned but substantially parallel.

In the length direction of the battery cell, an area within a range of 10 mm from the edge of the second active material layer is the end portion of the second active material layer. In an optional manner, the first current collector is provided with a first tab, and a direction of the first tab extending out of the first current collector is defined as a length direction of the battery cell; and in the length direction of the battery cell, the first active material layer exceeds the second active material layer. The length direction of the battery cell is set parallel to the first current collector. That is, the length direction of the battery cell is set perpendicular to the thickness direction of the battery cell and parallel to a main plane of the battery cell. The main plane of the battery cell corresponds to stacked surfaces of the first electrode plate and the second electrode plate.

In an optional manner, in the length direction of the battery cell, the first active material layer exceeds the second active material layer by a length of $\Delta L$, where $0.5$ mm $\leq \Delta L \leq 3$ mm.

In an optional manner, in the length direction of the battery cell, the raised structure exceeds the second active material layer.

In an optional manner, in the thickness direction of the battery cell, a vertical distance from any point of an edge of the raised structure to the surface of the first current collector is hp, and a thickness of a body portion of the second active material layer is hc, where $0.9$ ha $\leq$ hp. In the thickness direction of the battery cell, the edge of the raised structure includes any point of the raised structure away from the first current collector. By providing the raised structure and defining the transition section, an active material at the end portion of the first active material layer is increased, and the battery cell is not prone to lithium precipitation in the thinned area of the first electrode plate.

In an optional manner, a vertical distance from the vertex of the raised structure to the surface of the second current collector is $\Delta$hp, and the thickness of the body portion of the second active material layer is hc, where $\Delta$hp $\geq 0.5$ hc, and where the surface of the second current collector is a surface of the second current collector close to the raised structure. In the thickness direction of the battery cell, the vertex of the raised structure is a point of the raised structure farthest from the first current collector. On one hand, by defining the transition section and providing the raised structure, a risk of lithium precipitation of the battery cell at the end portion of the first active material layer is reduced. On the other hand, by defining the vertical distance between the raised structure and the surface of the second current collector, the thickness of the battery cell at the raised structure is not increased.

In an optional manner, the first current collector is provided with a first tab, and a direction of the first tab extending out of the first current collector is defined as a length direction of the battery cell; and in the length direction of the battery cell, the separator exceeds the first active material layer by a size of not less than 1 mm.

In an optional manner, the first current collector is provided with a first tab, and the first active material layer is not disposed on a surface of the first tab exceeding the first current collector.

In an optional manner, a distance from an edge of the first active material layer to an edge of the first current collector is less than or equal to 1 mm.

In an optional implementation, the first electrode plate is a positive plate, and the first active material layer is a positive membrane; and the second electrode plate is a negative plate, and the second active material layer is a negative membrane.

In an optional implementation, the first electrode plate is a negative plate, and the first active material layer is a negative membrane; and the second electrode plate is a positive plate, and the second active material layer is a positive membrane.

In an optional manner, hr = ha, thus the battery cell is even less prone to lithium precipitation at the end portion of the first active material layer, and the battery cell has excellent performance.

According to an aspect of an embodiment of this application, an electrical device is provided, including a load and the battery cell according to any one of the above, the battery cell being configured to supply power to the load.

The embodiments of this application have the beneficial effects that a battery cell and an electrical device are provided; the battery cell includes a first electrode plate, a second electrode plate and a separator; the first electrode plate and the second electrode plate are alternately stacked, and the separator is disposed between the first electrode plate and the second electrode plate; the first electrode plate includes a first current collector and a first active material layer disposed on the first current collector; the first active material layer of the first electrode plate includes a body portion and an end portion, where the end portion is provided with a raised structure and a transition section, and the transition section is adj acent to the body portion and the raised structure; in a thickness direction of the battery cell, a distance from a lowest point of a surface of the transition section to a surface of the first current collector is hr, and a thickness of the body portion of the first active material layer is ha, where (ha - hr)/ha $\leq$ 2%; and in the cycling process of the battery cell, with continuous consumption of the electrolyte, the battery cell is not prone to lithium precipitation at the end portion of the first electrode plate, so that the battery cell has excellent performance.

## BRIEF DESCRIPTION OF DRAWINGS

One or more embodiments are exemplarily illustrated through figures in accompanying drawings corresponding thereto. These exemplary illustrations do not constitute a limitation on the embodiments. Components with same reference numerals in the accompanying drawings are represented as similar components. Unless otherwise stated, the figures in the accompanying drawings do not constitute a scale limitation.

FIG. 1 is a schematic diagram of a battery cell according to an embodiment of this application;
FIG. 2 is a schematic sectional view along a line P-P in FIG. 1 according to an embodiment of this application;
FIG. 3 is an enlarged view of a portion A1 in FIG. 2 according to an embodiment of this application;
FIG. 4 is an enlarged view of a portion A2 in FIG. 2 according to an embodiment of this application;
FIG. 5 is a schematic diagram of a battery cell in one direction according to an embodiment of this application;
FIG. 6 is another schematic form of the enlarged view of the portion A2 in FIG. 2 according to an embodiment of this application;
FIG. 7 is a schematic sectional view of another implementation of the battery cell according to an embodiment of this application;
FIG. 8 is a schematic sectional view of yet another implementation of the battery cell according to an embodiment of this application;
FIG. 9 is a schematic sectional view of still another implementation of the battery cell according to an embodiment of this application; and
FIG. 10 is a schematic sectional view of still yet another implementation of the battery cell according to an embodiment of this application.

## DESCRIPTION OF EMBODIMENTS

In order to make objectives, technical solutions and advantages of embodiments of this application clearer, the technical solutions in embodiments of this application will be clearly and completely described below in conjunction with accompanying drawings in the embodiments of this application. Apparently, the described embodiments are merely some rather than all of the embodiments of this application. It is to be understood that specific embodiments described herein are merely intended to interpret this application rather than to limit this application. Based on the embodiments in this application, all other embodiments obtained by a person of ordinary skill in the art without creative labor shall fall within the scope of protection of this application.

It is thereby noted that when one component is expressed as being "fixed to" another component, it may be directly located on the another component, or there may be one or more components disposed therebetween. When one component is expressed as being "connected" to another component, it may be directly connected to the another component, or there may be one or more components disposed therebetween. The terms "vertical", "horizontal", "left", "right" and similar expressions used in the description are merely for the purpose of illustration.

In addition, technical features involved in the various embodiments of this application described below may be combined as long as they do not conflict with each other.

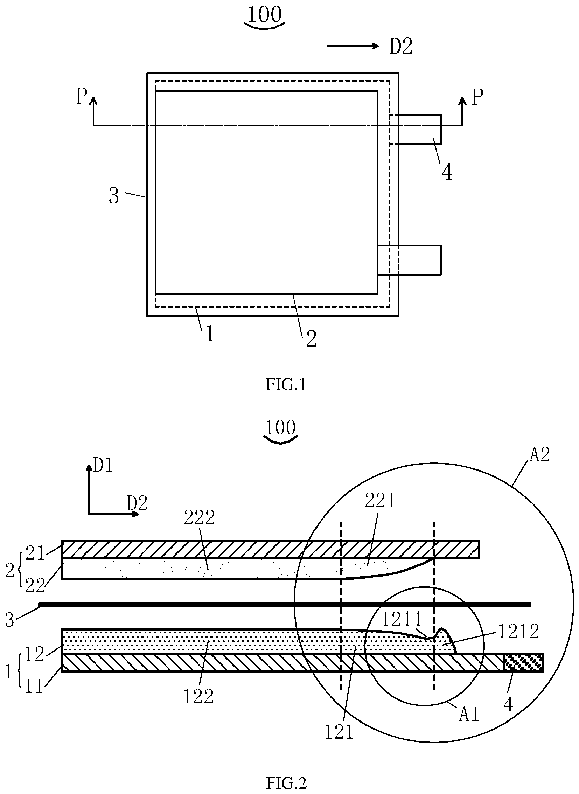

Referring to FIG. 1 and FIG. 2, a battery cell 100 includes a first electrode plate 1, a second electrode plate 2 and a separator 3. The first electrode plate 1 and the second electrode plate 2 are alternately stacked, and the separator 3 is disposed between the first electrode plate 1 and the second electrode plate 2.

Referring to FIG. 2, FIG. 3 and FIG. 4 for the foregoing first electrode plate 1 and second electrode plate 2, the first electrode plate 1 includes a first current collector 11 and a first active material layer 12, and the first active material layer 12 is disposed on the first current collector 11; and the second electrode plate 2 includes a second current collector 21 and a second active material layer 22, and the second active material layer 22 is disposed on the second current collector 21

When the first active material layer 12 is formed on the first current collector 11, an end portion 121 of the first active material layer 12 and a body portion 122 of the first active material layer 12 will be formed. The end portion 121 of the first active material layer 12 of the first electrode plate 1 is provided with a transition section 1211 and a raised structure 1212. The transition section 1211 is adjacent to the body portion 122 of the first active material layer 12 and the raised structure 1212. In a thickness direction D1 of the battery cell 100, a distance from a lowest point of a surface of the transition section 1211 to the surface of the first current collector 11 is hr, and a thickness of the body portion 122 of the first active material layer 12 is ha, where (ha - hr)/ha $\leq$ 2%. In this application, since a depth of the transition section 1211 is small, and the end portion 121 of the first active material layer 12 is provided with the raised structure 1212, in a cycling process of the battery cell 100, with continuous consumption of an electrolyte, the battery cell 100 is not prone to lithium precipitation at the end portion 121 of the first active material layer 12, i.e., not prone to lithium precipitation in a thinned area of the first electrode plate 1, and the battery cell 100 has excellent performance.

It is worth noting that a portion between an edge of the body portion 122 of the first active material layer 12 close to the raised structure 1212 and an edge of the raised structure 1212 close to the body portion 122 of the first active material layer 12 is the transition section 1211.

The surface of the transition section 1211 is a surface of the transition section 1211 away from the first current collector 11.

The thickness direction D1 of the battery cell 100 is a direction in which the first electrode plate 1 and the second electrode plate 2 are alternately stacked.

The first current collector 11 is provided with a first tab 4, where a direction of the first tab 4 extending out of the first current collector 11 is defined as a length direction D2 of the battery cell 100. In some embodiments, the length direction D2 of the battery cell 100 is parallel to the first current collector 11 and perpendicular to the thickness direction D1 of the battery cell 100.

In some embodiments, in the length direction D2 of the battery cell 100, an area within a range of 10 mm from an edge of the first active material layer 12 is the end portion 121 of the first active material layer 12.

The transition section 1211 is formed in such a way that the end portion 121 of the first active material layer 12 is sunken away from the surface of the first current collector 11 towards the first current collector 11.

A point corresponding to a maximum distance by which the end portion 121 of the first active material layer 12 is sunken away from a surface of the first current collector 11 towards the first current collector 11 is the lowest point of the surface of the transition section 1211.

The surface of the foregoing first current collector 11 is a surface of the first current collector 11 provided with the first active material layer 12.

It is thereby noted that in some embodiments, the first tab 4 is located on a position of the first current collector 11 close to the end portion 121 of the first active material layer 12.

It is thereby noted that in some embodiments, the first tab 4 and the first current collector 11 are integrally formed. Or, in other embodiments, the first tab 4 is welded to the first current collector 11.

The body portion 122 of the first active material layer 12 and the end portion 121 of the first active material layer 12 are connected. In the thickness direction D1 of the battery cell 100, a thickness of the transition section 1211 of the end portion 121 of the first active material layer 12 is less than a thickness ha of the body portion 122 of the first active material layer 12.

It is thereby noted that in some embodiments, the first current collector 11 includes a copper foil. The process of forming the first electrode plate 1 is that an active material is coated on the copper foil, and after the active material is shaped, the copper foil and the active material are cut to form the first electrode plate 1. Since the copper foil is cut, generally, the end portion 121 of the first active material layer 12 is only formed at an end of the first current collector 11 close to the first tab 4.

A body portion 222 of the second active material layer 22 and an end portion 221 of the second active material layer 22 are connected. In the thickness direction D1 of the battery cell 100, a thickness of the end portion 221 of the second active material layer 22 is less than a thickness hc of the body portion 222 of the second active material layer 22.

In some embodiments, the end portion 221 of the second active material layer 22 is a thinned area naturally formed when the second active material layer 22 is formed. In the length direction D2 of the foregoing battery cell 100, a size of the end portion 221 of the second active material layer 22 is related to properties of a material forming the second active material layer 22. If the material forming the second active material layer 22 has good fluidity, the end portion 221 of the second active material layer 22 has a large size in the foregoing second direction, otherwise, the end portion 221 of the second active material layer 22 has a small size.

According to an implementation of this application, in the length direction D2 of the battery cell 100, an area within a range of 10 mm from an edge of the second active material layer 22 is the end portion 221 of the second active material layer 22.

When the first electrode plate 1 and the second electrode plate 2 are stacked, the end portion 121 of the first active material layer 12 and the end portion 221 of the second active material layer 22 are stacked. That is, in the thickness direction D1 of the battery cell 100, the end portion 121 of the first active material layer 12 and the end portion 221 of the second active material layer 22 can be stacked in such a way that the edge of the end portion 121 of the first active material layer 12 and the edge of the end portion 221 of the second active material layer 22 are completely aligned, or the end portions of the two can be partially stacked with the edges not aligned but substantially parallel.

It is thereby noted that in some embodiments, in the length direction D2 of the foregoing battery cell 100, the first active material layer 12 exceeds the second active material layer 22.

It is thereby noted that in some embodiments, in the length direction D2 of the foregoing battery cell 100, the first active material layer 12 exceeds the second active material layer 22 by a length of $\Delta L$, where 0.5 mm $\leq \Delta L \leq$ 3 mm.

It is thereby noted that in some embodiments, in the length direction D2 of the foregoing battery cell 100, the first current collector 11 is provided as exceeding the second current collector 12.

It is thereby noted that in some embodiments, in the length direction D2 of the foregoing battery cell 100, the first current collector 11 exceeds the second current collector 12 by a size of not less than 0.5 mm and not greater than 3 mm.

It is thereby noted that in some embodiments, in the length direction D2 of the foregoing battery cell 100, the first electrode plate 1 is provided as exceeding the second electrode plate 2.

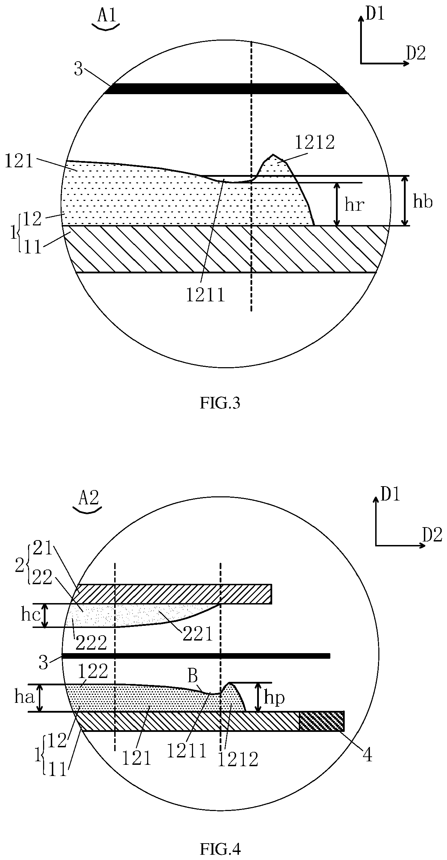

It is thereby noted that in some embodiments, referring to FIG. 4, in the length direction D2 of the foregoing battery cell 100, the first electrode plate 1 exceeds the second electrode plate 2 by a size H1 of not less than 0.5 mm and not greater than 3 mm.

It is thereby noted that in some embodiments, a distance from an edge of the first active material layer 12 to an edge of the first current collector 11 is less than or equal to 1 mm.

It is thereby noted that in some embodiments, the first current collector 11 is provided with a first tab 4, and the first active material layer 12 is not disposed on a surface of the first tab 4 exceeding the first current collector 11.

Referring to FIG. 2, FIG. 3 and FIG. 4 for the foregoing transition section 1211, in some embodiments, the transition section 1211 is formed at the end portion 121 of the first active material layer 12 when the first active material layer 12 is formed on the first current collector 11. In the thickness direction D1 of the battery cell 100, in the prior art, a maximum value of a depth of the formed transition section 1211 is generally 50% of the thickness ha of the body portion 122 of the first active material layer 12. When the transition section 1211 has a large depth, the battery cell 100 is prone to lithium precipitation at the transition section 1211.

A distance from a lowest point of the transition section 1211 to the surface of the first current collector 11 is hr, and a thickness of the body portion 122 of the first active material layer 12 is ha, where (ha-hr) is the depth of the transition section 1211.

The thickness of the transition section 1211 is a distance formed in such a way that the end portion 121 of the first active material layer 12 is sunken away from the surface of the first current collector 11 towards the first current collector 11 in the thickness direction D1 of the battery cell 100. In this application, $(ha - hr)/ha \leq 2\%$, that is, a ratio of the depth of the transition section 1211 to the thickness of the body portion 122 of the first active material layer 12 is defined to be less than 2%, which represents that each of ratios of the farthest distance by which the end portion 121 of the first active material layer 12 is sunken away from one end of the first current collector 11 towards the first current collector 11 to thicknesses of the body portion 122 of the first active material layer 12 is less than 2%. In addition, the end portion 121 of the first active material layer 12 is further provided with the raised structure 1212. By defining the depth of the transition section 1211 to be less than 2% of the thickness ha of the body portion 122 of the first active material layer 12, and providing the raised structure 1212, an active material at the end portion 121 of the first active material layer 12 is increased, and the battery cell 100 is not prone to lithium precipitation at the transition section 1211, so that the battery cell 100 has excellent performance.

It is thereby noted that, referring to FIG. 2, FIG. 3 and FIG. 6, in some embodiments, in the length direction D2 of the battery cell 100, a distance from the lowest point of the transition section 1211 to an edge of the first active material layer 12 is xr, where $2\ mm \leq xr \leq 4\ mm$; the surface of the transition section 1211 is provided with a point B, and a distance from the point B to the edge of the first active material layer 12 is xb, where $xb - xr = 2$ mm; and a distance from the point B to the surface of the first current collector 11 is hb, where $(hb - hr)/(xb - xr) \leq 2$. By further defining the transition section 1211, the occurrence of a deep and narrow sinking portion can be avoided.

The edge of the first active material layer 12 is an edge of the end portion 121 of the first active material layer 12 away from the body portion 122 of the first active material layer 12.

In the length direction D2 of the battery cell 100, the point B on the transition section 1211 includes a point of the transition section 1211 farthest from the end portion 121 of the first active material layer 12, that is, the point B on the transition section 1211 includes an end on a notch of the transition section 121 close to the body portion 122 of the first active material layer 12.

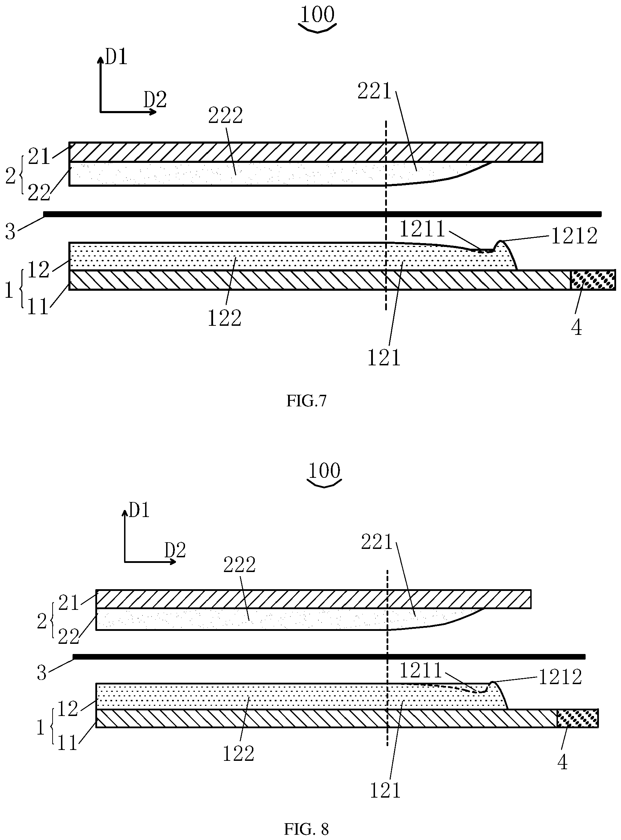

It is thereby noted that referring to FIG. 7, in some embodiments, the transition section 1211 is locally filled with the active material, thus the battery cell 100 is even less prone to lithium precipitation at the transition section 1211, and the battery cell 100 has excellent performance.

It is thereby noted that referring to FIG. 8, in some embodiments, a distance from the lowest point of the surface of the transition section 1211 to the surface of the first current collector 11 is hr, which is equal to the thickness ha of the body portion 122 of the first active material layer 12, i.e., hr = ha. In other words, the end portion 121 of the first active material layer 12 is filled to have a same thickness as the body portion 122 of the first active material layer 12.

Corresponding to the foregoing raised structure 1212, referring to FIG. 1, in some embodiments, in the length direction D2 of the battery cell 100, the raised structure 1212 exceeds the end portion 221 of the second active material layer 22.

In some embodiments, in the length direction D2 of the battery cell 100, the raised structure 1212 exceeds the second active material layer 22 by a length of not less than 0.5 mm and not greater than 3 mm.

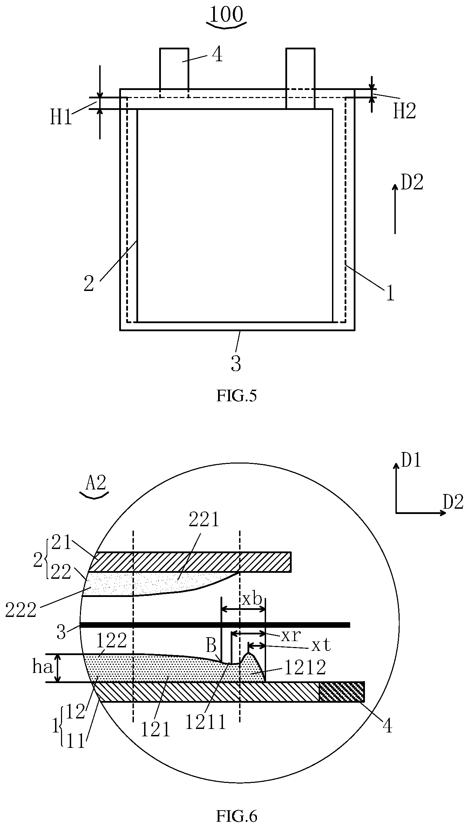

It is worth noting that referring to FIG. 6, in the length direction D2 of the battery cell 100, a distance from a vertex of a surface of the raised structure 1212 to the edge of the first active material layer 12 is xt, where $0.8\ mm \leq xt \leq 1.2\ mm$.

The surface of the raised structure 1212 is a surface of the raised structure 1212 away from the first current collector 11.

The vertex of the surface of the raised structure 1212 is a point of the surface of the raised structure 1212 farthest from the first current collector 11 in the thickness direction D1 of the battery cell 100.

It is thereby noted that referring to FIG. 1 and FIG. 4, in some embodiments, in the thickness direction D1 of the battery cell 100, a vertical distance from any point of an edge of the raised structure 1212 to the surface of the first current collector 11 is hp, and a thickness of a body portion 222 of the second active material layer 22 is hc, where $0.9 \, ha \leq hp$. By providing the raised structure 1212 and defining the transition section 1211, in a cycling process of the battery cell 100, compared with a battery cell 100 in the prior art, the active material at the end portion 121 of the first active material layer 12 is increased, and thus the battery cell 100 is not prone to lithium precipitation at the transition section 1211.

In the thickness direction D1 of the battery cell 100, the edge of the raised structure 1212 includes any point of the raised structure 1212 away from the first current collector 11.

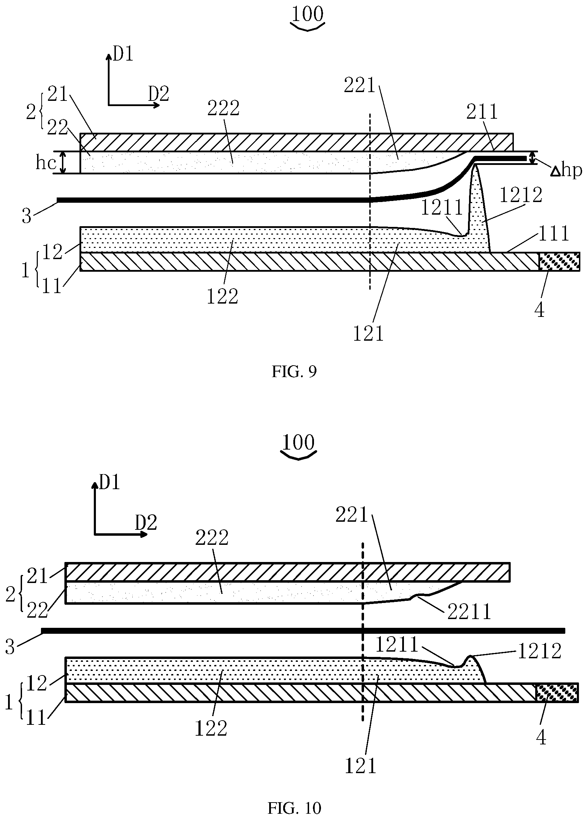

It is thereby noted that in some embodiments, referring to FIG. 9, a vertical distance from the vertex of the raised structure 1212 to the surface of the second current collector 21 is $\Delta hp$, and the thickness of the body portion 222 of the second active material layer 22 is hc, where $\Delta hp \geq 0.5 \, hc$, and where the surface of the second current collector 22 is a surface of the second current collector 22 close to the raised structure 1212. Therefore, on one hand, by providing the raised structure 1212 and defining the transition section 1211, a risk of lithium precipitation of the battery cell 100 at the end portion 121 of the first active material layer 12 is reduced, and on the other hand, by defining the vertical distance between the raised structure 1212 and the surface of the second current collector 21, the thickness of the battery cell 100 at the raised structure 1212 is not increased.

In the thickness direction D1 of the battery cell 100, the vertex of the raised structure 1212 is a point of the raised structure 1212 farthest from the first current collector 11.

It is thereby noted that in some embodiments, referring to FIG. 10, a sinking area 221 is provided in the end portion 221 of the second active material layer 22 of the second electrode plate 2. The sinking area 221 is formed in such a way that the end portion 221 of the first active material layer 22 is sunken away from a surface of the second current collector 21 towards the second current collector 21.

Referring to FIG. 2 and FIG. 4 for the foregoing separator 3, the separator 3 is stacked between the first electrode plate 1 and the second electrode plate 2. In some embodiments, in the length direction D2 of the battery cell 100, the separator 3 exceeds the first active material layer 12. It can be understood that when the first active material layer 12 exceeds the second active material layer 22, the separator 3 exceeds the second active material layer 22.

It is thereby noted that in some embodiments, in the length direction D2 of the battery cell 100, the separator 3 exceeds the first active material layer 12 by a size of not less than 1 mm.

It is thereby noted that in some embodiments, in the length direction D2 of the battery cell 100, the separator 3 is provided as exceeding the first current collector 11.

It is thereby noted that in some embodiments, in the length direction D2 of the battery cell 100, the separator 3 exceeds the first current collector 11 by a size of not less than 1 mm.

It is thereby noted that in some embodiments, in the length direction D2 of the battery cell 100, the separator 3 is provided as exceeding the first electrode plate 1.

It is thereby noted that referring to FIG. 4, in some embodiments, in the length direction D2 of the battery cell 100, the separator 3 exceeds the first electrode plate 1 by a size H2 of not less than 1 mm.

In the embodiment of this application, the battery cell 100 includes a first electrode plate 1, a second electrode plate 2 and a separator 3. The first electrode plate 1 and the second electrode plate 2 are alternately stacked, and the separator 3 is disposed between the first electrode plate 1 and the second electrode plate 2. The first electrode plate 1 includes a first current collector 11 and a first active material layer 12 disposed on the first current collector 11. The first active material layer 12 of the first electrode plate 1 includes a body portion 122 and an end portion 121, where the end portion 121 is provided with a transition section 1211 and a raised structure 121, and the transition section 122 is adjacent to the body portion 122 and the raised structure 1212. In a thickness direction D1 of the battery cell 100, a distance from a lowest point of the transition section 1211 to a surface of the first current collector 11 is hr, and a thickness of the body portion 122 of the first active material layer 12 is ha, where $(ha - hr)/ha \leq 2\%$. Thus, in a cycling process of the battery cell 100, with continuous consumption of an electrolyte, the battery cell 100 is not prone to lithium precipitation at the end portion 121 of the first active material layer 12, so that the battery cell 100 has excellent performance.

Embodiments of this application further provide an example of an electrical device. The electrical device includes a load and the foregoing battery cell 100. The battery cell 100 is connected with the load, and is configured to supply power to the load.

The electrical device can be an energy storage product, a mobile phone, a tablet, an unmanned aerial vehicle, an electric vehicle with one wheel or two or more wheels, an electric cleaning tool, etc.

For example, for the foregoing unmanned aerial vehicle, a battery pack is loaded on the unmanned aerial vehicle, and is configured to supply power to a load on the unmanned aerial vehicle including a flight system, a control system, a camera system, etc.

It is thereby noted that preferred embodiments of this application are given in the description of this application and the accompanying drawings thereof. However, this application may be implemented in many different forms and is not limited to the embodiments described in the description. These embodiments are not taken as an additional limitation on contents of this application, but are provided for the purpose of ensuring a more thorough and comprehensive understanding of the disclosure of this application. Moreover, the foregoing technical features continue to be combined to form various embodiments not listed above, which are all regarded as within the scope recited in the description of this application. Further, a person of ordinary skill in the art may make improvements or variations according to the foregoing illustrations, and all such improvements and variations shall fall within the scope of protection of the appended claims of this application.

## Claims

1. A battery cell, comprising a first electrode plate and a second electrode plate that are alternately stacked, a separator being disposed between the first electrode plate and the second electrode plate; the first electrode plate comprising a first current collector and a first active material layer disposed on a surface of the first current collector, **characterized in that**,

   the first active material layer comprises a body portion and an end portion, the end portion is provided with a raised structure and a transition section, and the transition section is adjacent to the body portion and the raised structure; and in a thickness direction of the battery cell, a distance from a lowest point of a surface of the transition section to the surface of the first current collector is hr, and a thickness of the body portion of the first active material layer is ha, wherein $(ha - hr)/ha \leq 2\%$.

2. The battery cell according to claim 1, **characterized in that**,

   the first current collector is provided with a first tab, and a direction of the first tab extending out of the first current collector is defined as a length direction of the battery cell; and in the length direction of the battery cell, a distance from the lowest point of the surface of the transition section to an edge of the first active material layer is xr, wherein $2 \text{ mm} \leq xr \leq 4 \text{ mm}$; and the surface of the transition section is provided with a point B, and a distance from the point B to the edge of the first active material layer is xb, wherein $xb - xr = 2 \text{ mm}$; and a distance from the point B to the surface of the first current collector is hb,

   wherein

   $$(hb - hr)/(xb - xr) \leq 2.$$

3. The battery cell according to claim 2, **characterized in that**, in the length direction of the battery cell, a distance from a vertex of a surface of the raised structure to the edge of the first active material layer is xt, wherein $0.8 \text{ mm} \leq xt \leq 1.2 \text{ mm}$.

4. The battery cell according to claim 1 or 3, **characterized in that**,

   the second electrode plate comprises a second current collector and a second active material layer disposed on a surface of the second current collector; and the end portion of the first active material layer and an end portion of the second active material layer are stacked.

5. The battery cell according to claim 4, **characterized in that**,

   the first current collector is provided with a first tab, and a direction of the first tab extending out of the first current collector is defined as a length direction of the battery cell; and in the length direction of the battery cell, the first active material layer exceeds the second active material layer.

6. The battery cell according to claim 5, **characterized in that**, in the length direction of the battery cell, the first active material layer exceeds the second active material layer by a length of $\Delta L$, wherein $0.5 \text{ mm} \leq \Delta L \leq 3 \text{ mm}$.

7. The battery cell according to claim 4, **characterized in that**, in the length direction of the battery cell, the raised structure exceeds the second active material layer.

8. The battery cell according to claim 4, **characterized in that**, in the thickness direction of the battery cell, a vertical distance from any point of an edge of the raised structure to the surface of the first current collector is hp, and a thickness of a body portion of the second active material layer is hc, wherein $0.9 \, ha \leq hp$.

9. The battery cell according to claim 8, **characterized in that**, a vertical distance from the vertex of the raised structure to the surface of the second current collector is $\Delta hp$, and the thickness of the body portion of the second active material layer is hc, wherein $\Delta hp \geq 0.5$

hc, and wherein the surface of the second current collector is a surface of the second current collector close to the raised structure.

**10.** The battery cell according to claim 1, **characterized in that**,

the first current collector is provided with a first tab, and a direction of the first tab extending out of the first current collector is defined as a length direction of the battery cell; and
in the length direction of the battery cell, the separator exceeds the first active material layer by a size of not less than 1 mm.

**11.** The battery cell according to claim 1, **characterized in that**, the first current collector is provided with a first tab, and the first active material layer is not disposed on a surface of the first tab exceeding the first current collector.

**12.** The battery cell according to claim 1, **characterized in that**, a distance from an edge of the first active material layer to an edge of the first current collector is less than or equal to 1 mm.

**13.** The battery cell according to claim 1, **characterized in that**, hr = ha.

**14.** An electrical device, **characterized in that**, the electrical device comprises a load and the battery cell according to any one of claims 1 to 13, the battery cell being configured to supply power to the load.

FIG.1

FIG.2

FIG.3

FIG.4

FIG.5

FIG.6

100

D1

D2

222

221

2 { 21
    22

3

12
1 { 11

1211

1212

122

121

4

FIG.7

100

D1

D2

222

221

2 { 21
    22

3

1211

1212

12
1 { 11

122

121

4

FIG. 8

FIG. 9

FIG. 10

## INTERNATIONAL SEARCH REPORT

| International application No. |
| --- |
| **PCT/CN2021/092436** |

**A. CLASSIFICATION OF SUBJECT MATTER**

H01M 4/13(2010.01)i; H01M 10/052(2010.01)i; H01M 50/533(2021.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT; WPI; EPODOC; CNKI: 电池, 电芯, 电极, 负极, 极片, 活性物质, 端部, 尾部, 边缘, 薄, 厚, 凹, 凸, 突, 深度, 桥 2w 锂, cell?, batter+, core?, pole, anode, active, protrusion, thick, thin, process, end, convex, depth, Lithium

**C. DOCUMENTS CONSIDERED TO BE RELEVANT**

| Category* | Citation of document, with indication, where appropriate, of the relevant passages | Relevant to claim No. |
| --- | --- | --- |
| X | CN 208819985 U (NINGDE CONTEMPORARY AMPEREX TECHNOLOGY CO., LTD.) 03 May 2019 (2019-05-03) description, paragraphs 0049-0061, and figures 1-4 | 1-14 |
| A | CN 103367702 A (DONGGUAN AMPEREX TECHNOLOGY LIMITED) 23 October 2013 (2013-10-23) entire document | 1-14 |
| A | CN 109088091 A (AUTOMOTIVE ENERGY SUPPLY CORP.) 25 December 2018 (2018-12-25) entire document | 1-14 |
| A | WO 2021038851 A1 (KABUSHIKI KAISHA TOSHIBA) 04 March 2021 (2021-03-04) entire document | 1-14 |
| A | CN 205355186 U (NINGDE AMPEREX TECHNOLOGY LTD.) 29 June 2016 (2016-06-29) entire document | 1-14 |
| A | WO 2013031213 A1 (PANASONIC CORPORATION et al.) 07 March 2013 (2013-03-07) entire document | 1-14 |
| A | CN 212380442 U (BYD CO., LTD.) 19 January 2021 (2021-01-19) entire document | 1-14 |

☑ Further documents are listed in the continuation of Box C.       ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **22 January 2022** | **07 February 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/092436**

**C.    DOCUMENTS CONSIDERED TO BE RELEVANT**

| Category* | Citation of document, with indication, where appropriate, of the relevant passages | Relevant to claim No. |
|---|---|---|
| A | CN 112750978 A (ZHUHAI COSMX BATTERY CO., LTD.) 04 May 2021 (2021-05-04) entire document | 1-14 |

Form PCT/ISA/210 (second sheet) (January 2015)

**INTERNATIONAL SEARCH REPORT**
**Information on patent family members**

International application No.

**PCT/CN2021/092436**

| Patent document cited in search report | | Publication date (day/month/year) | Patent family member(s) | | | Publication date (day/month/year) |
|---|---|---|---|---|---|---|
| CN | 208819985 U | 03 May 2019 | None | | | |
| CN | 103367702 A | 23 October 2013 | None | | | |
| CN | 109088091 A | 25 December 2018 | US | 2018366786 | A1 | 20 December 2018 |
| | | | US | 10505231 | B2 | 10 December 2019 |
| | | | JP | 2019003789 | A | 10 January 2019 |
| | | | JP | 6961398 | B2 | 05 November 2021 |
| | | | EP | 3416215 | A1 | 19 December 2018 |
| | | | EP | 3416215 | B1 | 24 February 2021 |
| WO | 2021038851 A1 | 04 March 2021 | None | | | |
| CN | 205355186 U | 29 June 2016 | WO | 2017113999 | A1 | 06 July 2017 |
| WO | 2013031213 A1 | 07 March 2013 | None | | | |
| CN | 212380442 U | 19 January 2021 | None | | | |
| CN | 112750978 A | 04 May 2021 | None | | | |

Form PCT/ISA/210 (patent family annex) (January 2015)